# EUROPÄISCHE PATENTANMELDUNG

(11) **EP 1 057 678 A1**
(43) Veröffentlichungstag der Anmeldung: **06.12.2000**
(21) Anmeldenummer: 00108125.6
(22) Anmeldetag: 13.04.2000
(51) Int. Cl.: B60K 31/04

(54) **Regelsystem und Verfahren zur Einstellung einer vorgebbaren Fahrzeug-Zielgeschwindigkeit mit Maximum-und-Minimumfunktionsmodul zur Gangbegrenzung**

(30) Priorität: 31.05.1999 DE 19924949
(71) Anmelder: DaimlerChrysler AG, 70567 Stuttgart (DE)
(72) Erfinder: Linden, Thomas, 70327 Stuttgart (DE)

(57) **Zusammenfassung**

Ein Regelsystem zur Einstellung einer vorgebbaren Fahrzeug-Zielgeschwindigkeit weist eine Geschwindigkeits-Regeleinheit auf, in der unter Berücksichtigung von Fahrzeug-Zustands- und Betriebsgrößen Stellsignale zur Einlegung einer bestimmten Gangstufe erzeugbar und einem Automatikgetriebe des Kraftfahrzeugs zuführbar sind.

Um die Fahrsicherheit und den Komfort bei Fahrzeugen mit Automatikgetriebe zu verbessern, sind der Geschwindigkeits-Regeleinheit Funktionsmodule zur Gangbegrenzung zugeordnet, wobei ein Minimum-Funktionsmodul zur Bestimmung eines einer unteren Gangbegrenzung mit einer Mindest-Gangstufe entsprechenden Stellsignals und ein Maximum-Funktionsmodul zur Bestimmung eines einer oberen Gangbegrenzung mit einer Höchst-Gangstufe entsprechenden Stellsignals vorgesehen ist.

## Beschreibung

Die Erfindung betrifft ein Regelsystem und ein Verfahren zur Einstellung einer vorgebbaren Fahrzeug-Zielgeschwindigkeit nach dem Oberbegriff des Anspruches 1 bzw. 11.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine beispielsweise in Abstands-Regelungssystemen automatisch ermittelte Höchstgeschwindigkeit nicht überschreiten darf. Zur Umsetzung der Begrenzer-Funktion werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Zielgeschwindigkeit eingestellt werden. Ein derartiges Geschwindigkeits-Regelsystem ist in der Druckschrift DE 44 07 062 A1 beschrieben worden.

Aus der Druckschrift DE 44 07 062 A1 ist es bekannt, zur Steuerung von Automatikgetrieben in Kraftfahrzeugen ein Getriebe-Stellsignal zu erzeugen, mit dem die reguläre Getriebeschaltlogik durchbrochen wird, uni das Fahrzeug aus der momentanen Geschwindigkeit auf eine gewünschte Höchstgeschwindigkeit abzubremsen, die beispielsweise dem Abstand zu einen vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Die Gangbegrenzung wird nach dem Erreichen der gewünschten Höchstgeschwindigkeit wieder aufgehoben und die reguläre Getriebeschaltlogik wieder in Kraft gesetzt.

Sowohl die Aktivierung als auch die Aufhebung der Gangbegrenzung können spontane Gangwechsel auslösen. Für den Fall, daß die tatsächliche Fahrzeuggeschwindigkeit nur geringfügig über der zulässigen Höchstgeschwindigkeit liegt, wird die Höchstgeschwindigkeit bereits kurz nach dem Rückschalten unterschritten, woraufhin die Gangbegrenzung aufgehoben und ein Gangwechsel in den nächsthöheren Gang durchgeführt wird. Der häufige Gangwechsel kann zu Irritationen des Fahrers und zur Beeinträchtigung der Fahrsicherheit führen.

Die Druckschrift US 5 669 850 offenbart einen Fahrgeschwindigkeitsregler, welcher zur Vermeidung häufiger Gangwechsel ein Heraufschalten in höhere Gangstufen in Situationen unterbindet, in denen in der höheren Gangstufe die gewünschte Zielgeschwindigkeit aufgrund des in dieser Stufe anderen Getriebe-Übersetzungsverhältnisses nicht einzuhalten ist. Die vom Fahrgeschwindigkeitsregler ausgelöste Blockade des Getriebes betrifft aber nur die Heraufschaltung in die unmittelbar höhere Gangstufe. Außerdem wird die Häufigkeit der Schaltwechsel nicht direkt beeinflußt, denn ein Schaltwechsel wird jederzeit zugelassen, solange mit der höheren Gangstufe die gewünschte Geschwindigkeit eingehalten werden kann. Eine Getriebebeeinflussung findet daher hauptsächlich im Übergangsbereich zwischen dem oberen Drehzahlbereich der niedrigeren und dem unteren Drehzahlbereich der höheren Gangstufe statt.

Ein weiterer Fahrgeschwindigkeitsregler ist aus der Druckschrift DE 195 09 492 C2 bekannt, welche offenbart, kurz vor Erreichen der vorgegebenen Höchstgeschwindigkeit Getriebe-Steuerungseingriffe durchzuführen, um ein Hochschalten und einen damit verbundenen Momentensprung zu unterdrücken, welcher ein Überschwingen über die Höchstgeschwindigkeit bewirken könnte. Als weiterer Getriebeeingriff ist vorgesehen, daß bei kleinen eingestellten Höchstgeschwindigkeiten im zweiten Gang angefahren wird und ein Anfahren im ersten Gang verhindert wird, da andernfalls das Motormoment bis zum Erreichen der Höchstgeschwindigkeit nicht mehr rechtzeitig abgebaut werden könnte. Weitergehende Getriebeeingriffe, insbesondere Getriebeeingriffe zur Reduzierung der Schalthäufigkeit, gehen aus der DE 195 09 492 C2 nicht hervor.

Der Erfindung liegt das Problem zugrunde, die Fahrsicherheit und den Komfort bei Fahrzeugen mit Automatikgetrieben, die mit einer Geschwindigkeits-Regeleinheit ausgestattet sind, zu verbessern. Es soll insbesondere vermieden werden, daß bei Durchbrechungen der regulären Getriebeschaltlogik aufgrund besonderer Situationen wie Berücksichtigung einer Zielgeschwindigkeit in kurzen Zeiträumen häufige Gangwechsel durchgeführt werden.

Dieses Problem wird erfindungsgemäß mit den Merkmalen des Anspruches 1 bzw. 11 gelöst.

Über die Vorgabe von Gangfenstern mit einer unteren Gangbegrenzung und einer oberen Gangbegrenzung kann die Schalthäufigkeit beeinflußt werden, wobei als Einflußfaktoren für die Bestimmung der Mindest- und der Höchst-Gangstufe des Gangfensters Fahrzeug-Zustands- und Betriebsgrößen berücksichtigt werden können. Die Mindest- und die Höchst-Gangstufe können beispielsweise davon abhängen, ob eine die reguläre Getriebeschaltlogik durchbrechende Funktion zu- oder abgeschaltet wird, aber auch die Motorlast, die Geschwindigkeit, die Drehzahl, die Hangneigung etc. können die Ganggrenzen beeinflussen. Innerhalb eines Gangfensters können Getriebschaltungen entsprechend dem aktivierten, auf die jeweilige Situation angepaßten Schaltprogramm ohne Beeinträchtigungen durchgeführt werden.

Die funktionale Aufteilung in eine untere und eine obere Gangbegrenzung hat den Vorteil, daß die beiden Begrenzungen unabhängig voneinander berechnet werden können, so daß in die Ermittlung der Mindest-Gangstufe und der Höchst-Gangstufe sowohl gleiche als auch unterschiedliche Parameter und Zustandsgrößen Eingang finden können. Es können fortlaufend neue Berechnungen für beide Begrenzungen durchgeführt werden, um Änderungen in den Betriebs- und Zustandsgrößen zu berücksichtigen.

Die Mindest-Gangstufe und die Höchst-Gangstufe werden in eigenen Funktionsmodulen bestimmt, die jeweils situationsabhängige Aktivierungs- und Deaktivierungskriterien aufweisen können.

Das erfindungsgemäße Regelsystem bzw. Verfahren erlaubt eine einfache, schnelle und übersichtliche Funktionsüberprüfung, da zwischen den angeforderten Modulen für Mindest- und Höchst-Gangstufe Wechselwirkungen zwar bestehen können, jedoch nicht zwingenderweise gegeben sind. Innerhalb des vorgegebenen Gangfensters kann das Automatikgetriebe entsprechend der aktuellen Schaltlogik Gangwechsel durchführen, so daß mehr Schaltfreiheitsgrade zur Verfügung stehen und dennoch ein ruhigerer Schaltverlauf mit höherem Komfort unter Einhaltung gegebener Zielfunktionen wie zum Beispiel schnelles Abbremsen eingestellt werden kann.

In einer zweckmäßigen Weiterbildung sind eine Mehrzahl von Minimum-Funktionsmodulen zur Bestimmung einer Mindest-Gangstufe und/oder eine Mehrzahl von Maximum-Funktionsmodulen zur Bestimmung einer Höchst-Gangstufe vorgesehen, wobei die Auswahl unter mehreren Mindest- bzw. mehreren Höchst-Gangstufen durch ein einstellbares Auswahlkriterium, insbesondere durch eine Maximumauswahl unter den in Frage kommenden Mindest-Gangstufen und eine Minimumauswahl unter den Frage kommenden Höchst-Gangstufen, getroffen wird. In dieser Ausführung kann ein auf die jeweilige Situation angepaßtes Gangfenster eingestellt werden, wobei nur diejenigen Funktionsmodule berücksichtigt werden, deren Aktivierungskriterien erfüllt sind.

Die Berücksichtigung einer Mehrzahl von Minimum- und Maximum-Funktionsmodulen mit Auswahlkriterien zur eindeutigen Bestimmung eines Gangfensters ermöglicht einen modularen Aufbau des Regelsystems, das mit geringem Aufwand um zusätzliche Funktionalitäten erweitert werden kann.

Zweckmäßig werden aus sicherheitstechnischen Gründen sowohl die Mindest-Gangstufe als auch die Höchst-Gangstufe einer Plausibilitätskontrolle unterzogen, um zu gewährleisten, daß nur sinnvolle, auf die jeweilige Situation angepaßte Gangfenster erzeugt werden. Die Plausibilitätskontrolle kann einen Drehzahlvergleich, einen Vergleich mit zusätzlichen Geschwindigkeitsgrenzen sowie logische Abfragen umfassen, in denen beispielsweise überprüft wird, ob die Höchst-Gangstufe die Mindest-Gangstufe übersteigt.

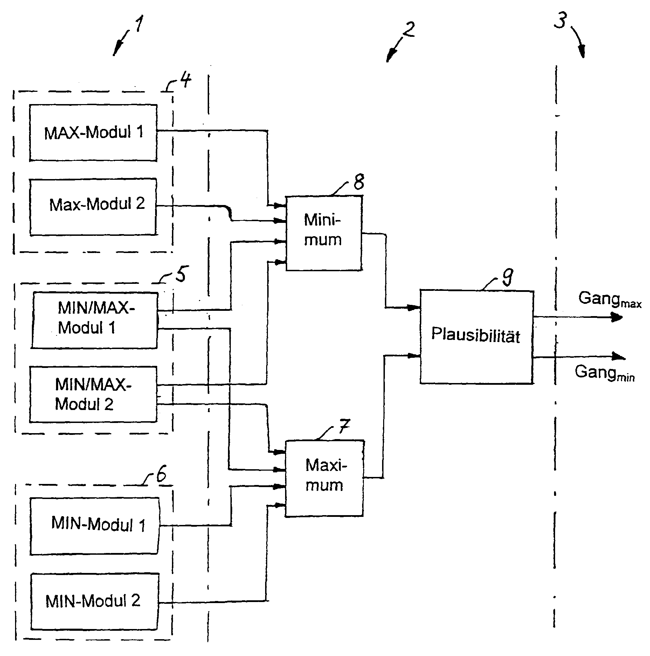

Weitere Vorteile und zweckmäßige Ausführungsformen sind den weiteren Ansprüchen, der Figurenbeschreibung und der Zeichnung zu entnehmen, in der ein Strukturdiagramm für ein Regelsystem zur Bestimmung eines Gangfensters zur Einhaltung einer vorgegebenen Zielgeschwindigkeit dargestellt ist.

Das Regelsystem besteht aus einem Modulabschnitt 1, welcher eine Mehrzahl von Funktionsmodulen zur Bestimmung einer oberen und einer unteren Gangbegrenzung eines Automatikgetriebes umfaßt, sowie einem Koordinationsabschnitt 2, in dem die in den Funktionsmodulen erzeugten Steilsignale koordiniert und kontrolliert werden. Die im Regelsystem erzeugten, ausgewählten und kontrollierten Steilsignale werden in einem folgenden Abschnitt 3 dem Getriebe zur Einstellung der gewünschten bzw. ermittelten Gangstufe bzw. zur Einhaltung des Getriebefensters zugeführt.

Der Modulabschnitt 1 weist mehrere Funktionsblöcke 4, 5, 6 auf, denen jeweils mehrere Funktionsmodule zugeordnet sind. Jedem Funktionsmodul ist die Berechnung einer oberen und/oder einer unteren Gangbegrenzung in Abhängigkeit eines definierten Satzes an Parametern, Fahrzeug-Zustandsgrößen und Fahrzeug-Betriebsgrößen zugeordnet. In einem ersten Funktionsblock 4 sind zumindest zwei Maximum-Funktionsmodule mit Bezeichnung 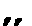 MAX-Modul 1" und 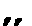 MAX-Modul 2" enthalten, in diesem Funktionsblock wird ausschließlich die obere Gangbegrenzung eines im Getriebe zu beachtenden Gangfensters berechnet. Die Maximum-Funktionsmodule des ersten Funktionsblocks 4 sind jeweils der Berechnung von Höchst-Gangstufen Gangₘₐₓ zugeordnet, wobei jeweils unterschiedliche Parameter, Zustands- und Betriebsgrößen bei der Ermittlung der Höchst-Gangstufen berücksichtigt werden können. Die weiteren Funktionsblöcke 5 und 6 enthalten weitere Funktionsmodule zur Ermittlung der oberen und/oder der unteren Gangbegrenzung.

Im Funktionsblock 5 sind zwei Module 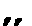 MIN/MAX-Modul 1" und 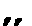 MIN/MAX-Modul 2" vorgesehen, mit denen jeweils eine Mindest-Gangstufe und eine Höchst-Gangstufe in Abhängigkeit von Fahrzeug-Betriebs- und Zustandsgrößen ermittelt werden kann. Im weiteren Funktionsblock 6 werden ausschließlich Werte für die untere Gangbegrenzung Gangₘᵢₙ in Funktionsmodulen 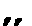 MIN-Modul 1" und 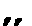 MIN-Modul 2" festgelegt.

Die Funktionsmodule innerhalb eines Funktionsblockes können sich im Hinblick auf die Abhängigkeit der zugrundeliegenden Parameter und Zustandsgrößen sowie im Hinblick auf die Berechnungsvorschrift für die Gangobergrenze bzw. die Ganguntergrenze unterscheiden. Die einzelnen Funktionsblöcke sind um weitere Funktionsmodule erweiterbar, um gegebenenfalls weitere Funktionalitäten abzudecken.

Zunächst werden im Modulabschnitt 1 Funktionsmodule zur Berechnung von mindestens einer Mindest-Gangstufe und mindestens einer Höchst-Gangstufe aktiviert. Die Mindest-Gangstufe und die Höchst-Gangstufe können sowohl in einem gemeinsamen Funktionsmodul 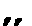 MIN/MAX-Modul" als auch in getrennten Funktionsmodulen 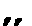 MIN-Modul" bzw. 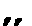 MAX-Modul" erzeugt werden. In Abhängigkeit der aktuellen Fahrsituation können mehrere Funktionsmodule gleichzeitig zur Ermittlung mehrerer Mindest- und Höchst-Gangstufen aktiviert werden. Die Auswahl der zu aktivierenden Funktionsmodule hängt von aktuellen Fahrzeug-Zustands- und Betriebsgrößen ab, die die aktuelle Fahrsituation kennzeichnen. Beispielsweise kann zur Realisierung einer vorgegebenen, zulässigen Höchstgeschwindigkeit in einem ersten Funktionsmodul eine Höchst-Gangstufe erzeugt werden, welche maximal zwei Gangstufen über der aktuellen Gangstufe liegt. Befindet sich das Fahrzeug zugleich auf abfallender Straße, so kann in einem weiteren Funktionsmodul eine Höchst-Gangstufe ermittelt werden, die der aktuell eingelegten Gangstufe entspricht. Auf diese Weise können in einer Situation mehrere unterschiedliche Mindest-Gangstufen und mehrere unterschiedliche Höchst-Gangstufen erzeugt werden, wobei jedes Funktionsmodul seine eigenen Aktivierungs- und Deaktivierungskriterien aufweist.

Die im Modulabschnitt 1 erzeugten Gangstufen werden im folgenden Koordinationsabschnitt 2 einer Auswahl und Überprüfung unterzogen, um Mehrdeutigkeiten bei der Definition eines Gangfensters auszuschließen und um sicherzustellen, daß die Ganggrenzen des Gangfensters gegebenen Sicherheits- und Plausibilitätsanforderungen genügen.

Im Koordinationsabschnitt 2 wird zunächst aus der Mehrzahl der erzeugten Gangstufen genau eine Mindest-Gangstufe und genau eine Höchst-Gangstufe gemäß einem gegebenen Kriterium ermittelt, das im Ausführungsbeispiel als Maximal- und Minimalauswahl ausgeführt ist. Alle im Modulabschnitt 1 erzeugten Mindest-Gangstufen werden einem Funktionsblock 7 mit einer Maximumauswahl zugeführt, in der der höchste Wert aller Mindest-Gangstufen zur Weiterverarbeitung ausgewählt wird. Entsprechend werden alle im Modulabschnitt 1 erzeugten Höchst-Gangstufen einem Funktionsblock 8 mit einer Minimumauswahl zugeführt, in der der kleinste Wert aller Höchst-Gangstufen ermittelt wird. Durch die Auswahl jeweils eines Wertes für die Ganguntergrenze und die Gangobergrenze wird ein eindeutiges Gangfenster festgelegt.

Durch die Wahl des größten Wertes aus allen ermittelten Mindest-Gangstufen und des kleinsten Wertes aus allen ermittelten Höchst-Gangstufen wird unter dem Aspekt der Sicherheit ein enges Gangfenster mit geringer Bandbreite bestimmt.

Die ausgewählte Gangobergrenze und Ganguntergrenze werden innerhalb des Koordinationsabschnitts 2 einer Plausibilitätskontrolle in einem Funktionsblock 9 unterzogen, in dem verschiedene Plausibilitätsbedingungen abgeprüft werden können, denen die Mindest-Gangstufe und die Höchst-Gangstufe genügen müssen, wobei sowohl das Relativverhältnis beider Ganggrenzen als auch absolute Bedingungen jeder Ganggrenze in bezug auf Fahrzeug-Zustands- und Betriebsgrößen berücksichtigt werden können.

Als Plausibilitätsbedingung kann überprüft werden, ob die aktuelle Motordrehzahl bei der ermittelten Höchst-Gangstufe sich noch mit hinreichendem Abstand zur zulässigen Höchstdrehzahl befindet. Sollte diese Bedingung nicht mehr zu gewährleisten sein, wird die Höchst-Gangstufe heraufgesetzt. Im Funktionsblock 9 kann weiterhin die Mindest-Gangstufe herabgesetzt werden, falls eine zulässige, untere Grenzgeschwindigkeit unterschritten wird. Außerdem darf die Mindest-Gangstufe nicht größer sein als die Höchst-Gangstufe; andernfalls wird eine Korrektur der Mindest-Gangstufe und/oder der Höchst-Gangstufe vorgenommen. Schließlich kann auch überprüft werden, ob die Mindest-Gangstufe kleiner oder gleich ist als bzw. wie die aktuelle Ist-Gangstufe.

Nach der Plausibilitätskontrolle im Funktionsblock 9 werden die Mindest-Gangstufe Gangₘᵢₙ und die Höchst-Gangstufe Gangₘₐₓ im folgenden Abschnitt 3 dem Getriebe zur Gangbegrenzung zwischen Mindest-Gangstufe und Höchst-Gangstufe zugeführt.

## Patentansprüche

1. Regelsystem zur Einstellung einer vorgebbaren Fahrzeug-Zielgeschwindigkeit, mit einer Geschwindigkeits-Regeleinheit, in der unter Berücksichtigung von Fahrzeug-Zustands- und Betriebsgrößen Stellsignale zur Einlegung einer bestimmten Gangstufe erzeugbar und einem Automatikgetriebe des Kraftfahrzeugs zuführbar sind,
**dadurch gekennzeichnet,**
daß der Geschwindigkeits-Regeleinheit Funktionsmodule zur Gangbegrenzung zugeordnet sind, wobei
- ein Minimum-Funktionsmodul zur Bestimmung eines einer unteren Gangbegrenzung mit einer Mindest-Gangstufe (Gangₘᵢₙ) entsprechenden Stellsignals und
- ein Maximum-Funktionsmodul zur Bestimmung eines einer oberen Gangbegrenzung mit einer Höchst-Gangstufe (Gangₘₐₓ) entsprechenden Stellsignals
vorgesehen ist.

2. Regelsystem nach Anspruch 1,
**dadurch gekennzeichnet,**
- daß eine Mehrzahl von Minimum-Funktionsmodulen zur Bestimmung eines einer unteren Gangbegrenzung mit einer Mindest-Gangstufe (Gangₘᵢₙ) entsprechenden Stellsignals vorgesehen ist,
- daß die Mindest-Gangstufen in den Minimum-Funktionsmodulen jeweils in Abhängigkeit unterschiedlicher Zustands- und Betriebsgrößen bestimmbar sind,
- daß die Mindest-Gangstufen einem Funktionsblock zuführbar sind, in welchem die Mindest-Gangstufen zur Auswahl einer einzigen Mindest-Gangstufe einem Auswahlkriterium unterzogen werden.

3. Regelsystem nach Anspruch 2,
**dadurch gekennzeichnet,**
daß als Auswahlkriterium eine Maximalauswahl getroffen wird.

4. Regelsystem nach einem der Ansprüche 1 bis 3,
**dadurch gekennzeichnet,**
- daß eine Mehrzahl von Maximum-Funktionsmodulen zur Bestimmung eines einer oberen Gangbegrenzung mit einer Höchst-Gangstufe (Gangₘₐₓ) entsprechenden Stellsignals vorgesehen ist,
- daß die Höchst-Gangstufen in den Maximum-Funktionsmodulen jeweils in Abhängigkeit unterschiedlicher Zustands- und Betriebsgrößen bestimmbar sind,
- daß die Höchst-Gangstufen einem Funktionsblock zuführbar sind, in welchem die Höchst-Gangstufen zur Auswahl einer einzigen Höchst-Gangstufe einem Auswahlkriterium unterzogen werden.

5. Regelsystem nach Anspruch 4,
**dadurch gekennzeichnet,**
daß als Auswahlkriterium eine Minimalauswahl getroffen wird.

6. Regelsystem nach einem der Ansprüche 1 bis 5,
**dadurch gekennzeichnet,**
daß die Mindest-Gangstufe (Gangₘᵢₙ) und die Höchst-Gangstufe (Gangₘₐₓ) in der Geschwindigkeits-Regeleinheit einer Plausibilitätskontrolle unterworfen werden.

7. Regelsystem nach Anspruch 6,
**dadurch gekennzeichnet,**
daß ein die Höchst-Gangstufe heraufsetzendes Steilsignal erzeugt wird, falls eine zulässige Höchstdrehzahl überschritten wird.

8. Regelsystem nach Anspruch 6 oder 7,
**dadurch gekennzeichnet,**
daß ein die Mindest-Gangstufe herabsetzendes Stellsignal erzeugt wird, falls eine zulässige Grenzgeschwindigkeit unterschritten wird.

9. Regelsystem nach einem der Ansprüche 6 bis 8,
**dadurch gekennzeichnet,**
daß in der Plausibilitätskontrolle überprüft wird, ob die Höchst-Gangstufe größer oder gleich ist als bzw. wie die Mindest-Gangstufe des Gangfensters.

10. Regelsystem nach einem der Ansprüche 6 bis 9,
**dadurch gekennzeichnet,**
daß in der Plausibilitätskontrolle überprüft wird, ob die Mindest-Gangstufe kleiner oder gleich ist als bzw. wie die aktuelle Ist-Gangstufe.

11. Verfahren zur Einstellung einer vorgebbaren Fahrzeug-Zielgeschwindigkeit, insbesondere Verfahren zum Betrieb des Regelsystems nach einem der Ansprüche 1 bis 10, wobei unter Berücksichtigung von Fahrzeug-Zustands- und Betriebsgrößen Stellsignale zur Einlegung einer bestimmten Gangstufe in einem Automatikgetriebe des Kraftfahrzeugs erzeugt werden,
**dadurch gekennzeichnet,**
daß ein zulässiges Getriebefenster mit einer Mindest-Gangstufe und einer Höchst-Gangstufe vorgegeben wird, wobei die Gangstufen separat und unabhängig voneinander bestimmbar sind.
